# EUROPÄISCHE PATENTSCHRIFT

(11) **EP 3 488 198 B1**
(45) Veröffentlichungstag und Bekanntmachung des Hinweises auf die Patenterteilung: **22.03.2023**
(21) Anmeldenummer: 17737278.6
(22) Anmeldetag: 10.07.2017
(51) Int. Cl.: G01F 23/36, G01F 23/38, G01F 23/46, G01F 23/62, G01D 5/165

(54) **FÜLLSTANDSGEBER**
FILLING LEVEL INDICATOR
INDICATEUR DE NIVEAU

(30) Priorität: 22.07.2016 DE 102016213501
(43) Veröffentlichungstag der Anmeldung: 29.05.2019
(73) Patentinhaber: Vitesco Technologies GmbH, 93055 Regensburg (DE)
(72) Erfinder: BENNER, Hans-Guenter, 65830 Kriftel (DE); KADLER, Matthias, 65428 Rüsselsheim (DE)
(74) Vertreter: Vitesco Technologies
(86) Internationale Anmeldenummer: PCT/EP2017/067269
(87) Internationale Veröffentlichungsnummer: WO 2018/015195

(56) Entgegenhaltungen:
- WO-A1-2015/185265
- DE-A1- 19 526 254
- DE-A1- 19 701 246
- DE-A1-102004 039 853
- DE-A1-102007 061 316
- DE-A1-102014 210 728
- US-A- 4 873 865
- Wikipedia: "Heißverstemmen", , 24 July 2016 (2016-07-24), XP055747632, Retrieved from the Internet: URL:https://de.wikipedia.org/w/index.php?t itle=Heißverstemmen&oldid=156141773 [retrieved on 2020-11-06]

## Beschreibung

### Technisches Gebiet

Die Erfindung betrifft einen Füllstandsgeber für die Bestimmung eines Füllstandes in einem Tank, mit einem Widerstandsnetzwerk, mit einem Kontaktelement und mit einem magnetischen Element, wobei das Kontaktelement beabstandet zu dem Widerstandsnetzwerk angeordnet ist und das magnetische Element relativ zum Widerstandsnetzwerk und dem Kontaktelement bewegbar ist, wobei durch eine Auslenkung des Kontaktelementes eine elektrisch leitfähige Verbindung zwischen dem Kontaktelement und dem Widerstandsnetzwerk herstellbar ist.

### Stand der Technik

Füllstandsgeber zur Ermittlung des Füllstands in einem Kraftstofftank weisen ein Widerstandsnetzwerk auf, welches abhängig von dem tatsächlichen Füllstand ein Signal erzeugt, welches den Füllstand im Kraftstofftank abbildet. Hierzu wird ein Schwimmer eingesetzt, der auf der Oberfläche des Kraftstoffs im Kraftstofftank schwimmt und mittels eines Gestänges und einem Schleifkontakt auf das Widerstandsnetzwerk einwirkt. Die Bewegung des Schwimmers infolge eines steigenden oder sinkenden Füllstandes wird über das Gestänge an den Schleifkontakt übertragen, der infolge der Bewegung an dem Widerstandsnetzwerk vorbeigeführt wird. Abhängig von der Position des Schleifkontakts wird hierbei ein unterschiedliches elektrisches Signal erzeugt. Durch eine Normierung des Signals und einer spezifischen Gestaltung des Widerstandsnetzwerks kann aus dem an dem Widerstandsnetzwerk erzeugten Signal direkt auf den Füllstand im Kraftstofftank geschlossen werden. Solche Füllstandsgeber sind in vielfältiger Weise im Stand der Technik bekannt, wie beispielsweise aus der Druckschrift DE 10 2007 061316 A1.

Die Druckschrift WO 2015/185265 A1 offenbart einen Füllstandssensor zum Detektieren eines Füllstandes in einem Behälter eines Fahrzeugs, der eine Grundplatte, eine Kontaktfederanordnung und ein Abstandhalterelement aufweist. Die Grundplatte weist eine erste elektrisch leitfähige Kontaktfläche und eine zweite elektrisch leitfähige Kontaktfläche auf. Die Kontaktfederanordnung weist eine dritte elektrisch leitfähige Kontaktfläche und eine Vielzahl von federnden Kontaktzungen, die mit der dritten Kontaktfläche elektrisch verbunden sind, auf. Das Abstandhalterelement ist zwischen die Grundplatte und die Kontaktfederanordnung zwischengelagert und verbindet die dritte Kontaktfläche an der Kontaktfederanordnung und die zweite Kontaktfläche an der Grundplatte elektrisch miteinander. Der Füllstandssensor ist dadurch gekennzeichnet, dass das Abstandhalterelement mit einem metallischen Material ausgebildet ist.

Darüber hinaus sind Füllstandsgeber bekannt, die anstelle eines Schleifkontakts ein Kontaktelement aufweisen, welches eine Mehrzahl von fingerartigen Abschnitten aufweist, die durch eine Magnetkraft derart ausgelenkt werden können, dass ein elektrischer Kontakt zwischen einem fingerartigem Abschnitt und einem Widerstandsnetzwerk erzeugt wird. Durch das Erzeugen des elektrischen Kontakts wird ein elektrisches Signal erzeugt. Abhängig von der Ausgestaltung des Widerstandsnetzwerks und des Kontaktelementes kann durch das erzeugte Signal direkt auf den Füllstand im Kraftstofftank geschlossen werden. Ein solcher Füllstandsgeber ist beispielsweise durch die DE 197 01 246 A1 bekannt.

Das Kontaktelement ist gegenüber dem Widerstandsnetzwerk beabstandet angeordnet, so dass eine Auslenkung der fingerartigen Abschnitte zu einer Kontaktierung zwischen dem Kontaktelement und dem Widerstandsnetzwerk führen kann. Die bislang bekannten Vorrichtungen weißen Distanzelemente auf, die insbesondere gegenüber den aggressiven Eigenschaften des Kraftstoffs keine dauerhaltbare Beständigkeit aufweisen.

### Darstellung der Erfindung, Aufgabe, Lösung, Vorteile

Daher ist es die Aufgabe der vorliegenden Erfindung einen Füllstandsgeber zu schaffen, welcher ein gegenüber den chemischen Eigenschaften des Kraftstoffs unempfindliches Distanzelement zwischen dem Kontaktelement und dem Widerstandsnetzwerk aufweist.

Die Aufgabe hinsichtlich des Füllstandsgebers wird durch einen Füllstandsgeber mit den Merkmalen von Anspruch 1 gelöst.

Ein Ausführungsbeispiel der Erfindung betrifft einen Füllstandsgeber für die Bestimmung eines Füllstandes in einem Tank, umfassend einen Sensor mit einem Widerstandsnetzwerk, mit einem Kontaktelement und mit einem magnetischen Element, wobei das Kontaktelement beabstandet zu dem Widerstandsnetzwerk angeordnet ist und das magnetische Element relativ zum Widerstandsnetzwerk und dem Kontaktelement bewegbar ist, wobei abhängig von einer Position des magnetischen Elements relativ zu dem Widerstandsnetzwerk durch eine Auslenkung des Kontaktelementes eine elektrisch leitfähige Verbindung zwischen dem Kontaktelement und dem Widerstandsnetzwerk herstellbar und ein elektrisches Signal erzeugbar ist, welches eine direkte Aussage über den Füllstand in dem Tank zulässt, wobei zwischen dem Widerstandsnetzwerk und dem Kontaktelement ein Distanzelement aus Kunststoff angeordnet ist, wobei das Distanzelement mit dem Widerstandsnetzwerk und/oder dem Kontaktelement mittels Heißverstemmen verbunden ist.

Der verwendete Kunststoff ist besonders bevorzugt resistent gegen die korrosiven Eigenschaften des Kraftstoffs innerhalb des Kraftstofftanks, in welchem der Füllstandsgeber angeordnet ist. Dies ist vorteilhaft, da es somit nicht mehr notwendig ist eine vollständige Abdichtung des Gehäuses des Füllstandsgebers gegenüber dem Kraftstoff vorzusehen. In bisherigen aus dem Stand der Technik bekannten Anwendungen wird das Gehäuse fluiddicht ausgeführt und regelmäßig mit einem Schutzgas, wie beispielsweise Helium befüllt, um sicherzustellen, dass kein Kraftstoff in das Gehäuse des Füllstandsgebers eindringt. Die Herstellung eines solchen Gehäuses ist sehr aufwändig und damit teuer. Außerdem weisen solche Gehäuse eine zusätzliche Fehlerquelle auf, die zu Funktionseinschränkungen oder dem Totalausfall des Füllstandsgebers führen kann.

Eine Beabstandung des Kontaktelementes von dem Widerstandsnetzwerk ist notwendig, um einen dauerhaften elektrisch leitfähigen Kontakt zwischen beiden Elementen zu verhindern. Das Kontaktelement ist bevorzugt durch eine sehr dünne Metallfolie gebildet mit einzelnen filigranen fingerartigen Strukturen, die durch das Vorbeiführen eines Magneten ausgelenkt werden können. Die Erzeugung eines genügend großen Abstandes zwischen dem Kontaktelement und dem Widerstandsnetzwerk kann daher nicht durch das Kontaktelement selbst erreicht werden. Daher ist es vorteilhaft, das Kontaktelement durch ein zusätzliches Distanzelement vom Widerstandsnetzwerk zu beabstanden.

Um eine Verbindung des Distanzelementes mit dem Widerstandsnetzwerk und/oder dem Kontaktelement zu erzeugen wird bevorzugt das Heißverstemmen als Verfahren gewählt, da hier eine dauerhafte stabile Verbindung erzeugt werden kann, ohne dabei große Kräfte auf das Widerstandsnetzwerk und/oder das Kontaktelement ausüben zu müssen. Durch das Heißverstemmen kann eine dauerhafte und formstabile Verbindung erzeugt werden.

Besonders vorteilhaft, ist es, wenn das Kontaktelement und/oder das Widerstandsnetzwerk zumindest eine Durchdringung aufweist, durch welche ein Vorsprung des Distanzelementes hindurch ragt.

Dies ist vorteilhaft, um das Distanzelement zumindest mit einem Teilabschnitt durch das Widerstandsnetzwerk und/oder das Kontaktelement zu führen und eine dauerhafte Verbindung durch das Heißverstemmen zu erzeugen. Eine solche Durchführung des Materials des Distanzelementes ist notwendig, um schließlich mit dem Heißverstemmen eine Fixierung des Distanzelementes zu erreichen.

Auch ist es vorteilhaft, wenn an dem Kontaktelement und/oder an dem Widerstandsnetzwerk auf der jeweils dem Distanzelement abgewandten Seite ein die jeweilige Durchdringung überdeckender Teilabschnitt des Distanzelementes angeordnet ist.

Durch das Heißverstemmen wird ein durch eine der Durchdringungen geführte Materialabschnitt beziehungsweise Vorsprung des Distanzelementes aufgewärmt und unter Druck verformt. Dabei wird der durch die Durchdringung durchgeführte Materialabschnitt pilzartig aufgeweitet, so dass dieser schließlich breiter ist als die Durchdringung durch die er geführt wurde. Dadurch wird sichergestellt, dass das Distanzelement nicht mehr zerstörungsfrei von dem Widerstandsnetzwerk und/oder dem Kontaktelement entfernt werden kann.

Es können bevorzugt auch Formteile zum Einsatz kommen, welche eine vordefinierte Verformung des Materials des Distanzelementes erlauben, um beispielsweise eine vordefinierte Höhe und/oder Breite des verformten Bereichs zu erzeugen.

Ein bevorzugtes Ausführungsbeispiel ist dadurch gekennzeichnet, dass durch das Distanzelement eine elektrische Isolation zwischen dem Kontaktelement und dem Widerstandsnetzwerk erzeugt ist. Die elektrische Isolation ist notwendig, um die ordnungsgemäße Funktion des Füllstandsgebers zu ermöglichen. Es soll dabei stets nur ein definierter Teilabschnitt des Kontaktelementes durch den Magneten ausgelenkt und mit dem Widerstandsnetzwerk in elektrisch leitenden Kontakt gebracht werden. Nur auf diese Weise ist eine korrekte Ermittlung des Füllstandes möglich.

Auch ist es zu bevorzugen, wenn das Distanzelement zwei sich gegenüberliegende ebene Außenflächen aufweist, wobei an den Außenflächen jeweils zumindest ein von der Außenfläche abragender Vorsprung angeordnet ist. Dieser Vorsprung ist vorteilhaft um die in dem Widerstandsnetzwerk und/oder dem Kontaktelement vorgesehenen Durchdringungen zu durchdringen und so einen definierten Materialabschnitt des Distanzelementes auf die dem Distanzelement abgewandte Seite des Widerstandsnetzwerks und/oder dem Kontaktelement zu bringen. Erst danach kann eine Heißverstemmung des durch die Durchdringung hindurchragenden Teils des Distanzelementes erfolgen.

Darüber hinaus ist es vorteilhaft, wenn das Distanzelement aus einem thermisch verformbaren und bei Raumtemperatur formstabilen Kunststoff erzeugt ist. Vorteilhaft ist beispielsweise ein Thermoplast. Dies ermöglicht es zum Einen das Distanzelement auf einfache Weise und mit nur geringen geometrischen Einschränkungen auszuformen und zum Anderen eine definierte Verformung der durch die Durchdringungen hindurchragenden Abschnitte des Distanzelementes zu erzeugen. So kann das Distanzelement auf einfache Weise mit dem Widerstandsnetzwerk und/oder dem Kontaktelement verbunden werden. Der Kunststoff ist bevorzugt über das Niveau der gewöhnlichen Raumtemperatur von etwa 20 Grad Celsius hinaus auch bis zu einer Temperaturgrenze, die oberhalb der gewöhnlich auftretenden thermischen Belastung im Betrieb liegt, formstabil.

Weiterhin ist es vorteilhaft, wenn das Kontaktelement und/oder das Widerstandselement mit den Vorsprüngen des Distanzelementes korrespondierende Durchdringungen aufweist. Dies ist vorteilhaft, um eine genaue Positionierung des Distanzelementes gegenüber dem Widerstandsnetzwerk und/oder dem gegenüber dem Kontaktelement zu erreichen. Dadurch wird der Montageprozess vereinfacht.

Auch ist es zweckmäßig, wenn das Distanzelement einteilig mit dem Widerstandselement ausgebildet ist und das Kontaktelement durch Heißverstemmen mit dem Distanzelement unverlierbar verbunden ist. Dies ist vorteilhaft, um die Komplexität des Bauteils zu verringern und somit den Montageprozess zu vereinfachen. Das Distanzelement kann in einer solchen Ausführung auch vorteilhaft Teil einer weitergehenden zumindest partiellen elektrischen Isolation des Widerstandsnetzwerks sein.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: einen Schnitt durch einen Sensor eines Füllstandsgebers wie er im Stand der Technik bekannt ist, wobei in dem Gehäuse des Sensors das Kontaktelement von dem Widerstandsnetzwerk durch ein Klebeband beabstandet ist, und
- Fig. 2: einen Schnitt durch einen Sensor eines Füllstandsgebers, wobei in dem Gehäuse des Sensors das Kontaktelement von dem Widerstandsnetzwerk durch ein Distanzelement aus Kunststoff gebildet ist, welches mit dem Kontaktelement und dem Widerstandsnetzwerk heißverstemmt ist.

### Bevorzugte Ausführung der Erfindung

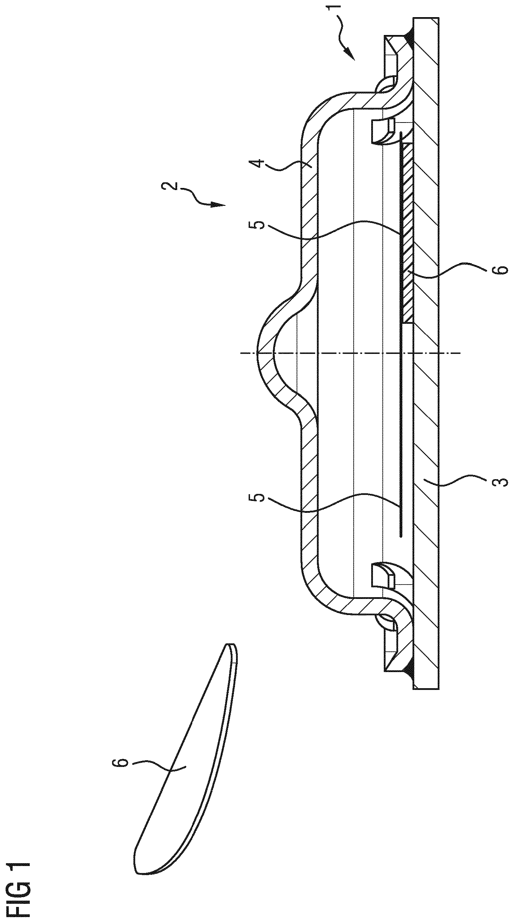

Die Figur 1 zeigt im rechten Bereich eine Schnittansicht durch das Gehäuse 1 eines Sensors 2. Der Sensor 2 weißt ein als Boden des Gehäuses 1 dienendes Widerstandsnetzwerk 3 auf. Auf dieses Widerstandsnetzwerk 3 ist ein Deckel 4 aufgesetzt. In dem dazwischen gebildeten Hohlraum ist ein Kontaktelement 5 angeordnet, welches durch ein Distanzelement 6 von dem Widerstandsnetzwerk 3 beabstandet ist.

Das Distanzelement 6 in Figur 1 ist durch ein Klebeband gebildet, welches beidseitig klebt und sowohl mit dem Kontaktelement 5 als auch mit dem Widerstandsnetzwerk 3 verklebt ist. Durch die Dicke des Klebebandes 6 wird der Abstand des Kontaktelementes 5 zum Widerstandsnetzwerk 3 definiert.

Im linken Teil der Figur 1 ist eine Ansicht des verwendeten Klebebandes dargestellt.

Das verwendete Klebeband 6 ist dabei empfindlich gegenüber den korrosiven Eigenschaften des Kraftstoffs, welcher das Gehäuse 1 des Sensors 2 im Betrieb umgibt. Daher muss das Gehäuse 1 besonders dicht ausgeführt werden, um ein Eindringen des Kraftstoffs zu verhindern. Hierzu muss ein hoher Produktionsaufwand betrieben werden. Zusätzlich wird das Gehäuse 1 oftmals mit Helium befüllt, um das Eindringen von Kraftstoff zu verhindern. Folglich muss dieser Arbeitsschritt im Rahmen der Produktion vorgesehen werden und zusätzlich muss ein Leckagetest zur Absicherung stattfinden.

Das Ausführungsbeispiel der Figur 1 entspricht dem Stand der Technik.

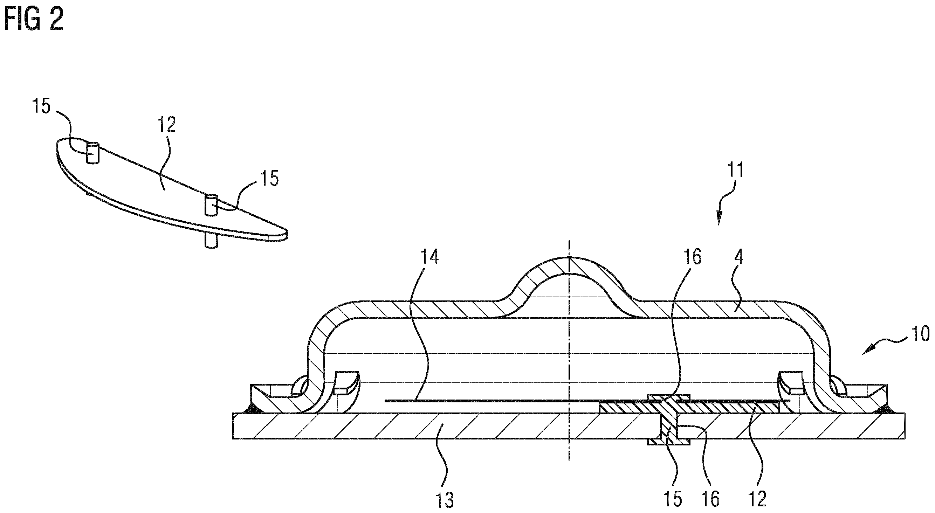

Die Figur 2 zeigt einen Schnitt durch ein Gehäuse 10 eines Sensors 11 dessen Funktionsprinzip dem bereits in Figur 1 gezeigten Sensor 1 entspricht.

Im Unterschied zur Figur 1 ist in Figur 2 das Distanzelement 12 durch ein Kunststoffelement gebildet, welches durch Heißverstemmen mit dem Widerstandsnetzwerk 13 und dem Kontaktelement 14 verbunden ist.

Der gewählte Kunststoff für das Distanzelement 12 ist resistent gegenüber den korrosiven Wirkungen des Kraftstoffs, weswegen die Abdichtung des Gehäuses 10 in Figur 2 nicht so hohe Ansprüche erfüllen muss, wie in dem Ausführungsbeispiel der Figur 1.

Im linken Teil der Figur 2 ist das Distanzelement 12 in einer räumlichen Ansicht dargestellt. Das Distanzelement 12 weist im Wesentlichen dieselben Abmessungen wie das Distanzelement 6 der Figur 1 auf. Das Distanzelement 12 ist jedoch aus einem abweichenden Material gefertigt.

Weiterhin weist das Distanzelement 12 nach oben und nach unten abragende Vorsprünge 15 auf, welche der Positionierung gegenüber dem Kontaktelement 14 und dem Widerstandsnetzwerk 13 dienen. Das Widerstandsnetzwerk 13 und das Kontaktelement 14 weisen Durchdringungen 16 auf, durch welche während der Montage die Vorsprünge 15 hindurchgeführt werden. Durch die Positionierung der Vorsprünge 15 und der Durchdringungen 16 wird eine Ausrichtung des Distanzelementes 12 gegenüber dem Widerstandsnetzwerk 13 und dem Kontaktelement 14 erreicht.

Die durch das Kontaktelement 14 und das Widerstandsnetzwerk 13 hindurchragenden Vorsprünge 15 des Distanzelementes 12 werden während der Montage erwärmt und mit einer Kraftkomponente belastet, um eine Aufweitung der Vorsprünge 15 zu erreichen und so eine untrennbare Verbindung zwischen dem Distanzelement 12 und dem Kontaktelement 14 und dem Widerstandsnetzwerk 13 zu erzielen.

Das Ausführungsbeispiel der Figur 2 ist beispielhaft und weist insbesondere keinen beschränkenden Charakter auf. Es dient der Verdeutlichung des Erfindungsgedankens. Insbesondere die geometrischen Abmaße des Distanzelementes 12 sowie die Anordnung und die Anzahl der Durchdringungen 16 und Vorsprünge 15 sind beispielhaft.

Ein Sensor, wie er in den Figuren 1 und 2 gezeigt ist, kann bevorzugt in einem Füllstandsgeber verwendet werden, der über eine geeignete Mechanik den Füllstand in einem Tank auf einen am Sensor vorbeigeführten Magneten überträgt, wobei von dem Magneten abhängig von seiner Position relativ zum Widerstandsnetzwerk ein elektrisches Signal erzeugt wird, welches eine direkte Aussage über den Füllstand im Tank zulässt.

## Patentansprüche

1. Füllstandsgeber für die Bestimmung eines Füllstandes in einem Tank, umfassend einen Sensor mit einem Widerstandsnetzwerk (13), mit einem Kontaktelement (14) und mit einem magnetischen Element, wobei das Kontaktelement (14) beabstandet zu dem Widerstandsnetzwerk (13) angeordnet ist und das magnetische Element relativ zum Widerstandsnetzwerk (13) und dem Kontaktelement (14) bewegbar ist, wobei abhängig von einer Position des magnetischen Elements relativ zu dem Widerstandsnetzwerk (13) durch eine Auslenkung des Kontaktelementes (14) eine elektrisch leitfähige Verbindung zwischen dem Kontaktelement (14) und dem Widerstandsnetzwerk (13) herstellbar und ein elektrisches Signal erzeugbar ist, welches eine direkte Aussage über den Füllstand in dem Tank zulässt, **dadurch gekennzeichnet, dass** zwischen dem Widerstandsnetzwerk (13) und dem Kontaktelement (14) ein Distanzelement (12) aus Kunststoff angeordnet ist, wobei das Distanzelement (12) mit dem Widerstandsnetzwerk (13) und/oder dem Kontaktelement (14) mittels Heißverstemmen verbunden ist.

2. Füllstandsgeber nach Anspruch 1, **dadurch gekennzeichnet, dass** das Kontaktelement (14) und/oder das Widerstandsnetzwerk (13) zumindest eine Durchdringung (16) aufweist, durch welche ein Vorsprung (15) des Distanzelementes (12) hindurch ragt.

3. Füllstandsgeber nach Anspruch 2, **dadurch gekennzeichnet, dass** an dem Kontaktelement (14) und/oder an dem Widerstandsnetzwerk (13) auf der jeweils dem Distanzelement (12) abgewandten Seite ein die jeweilige Durchdringung (16) überdeckender Teilabschnitt des Distanzelementes (12) angeordnet ist.

4. Füllstandsgeber nach einem der vorhergehenden Ansprüche, **dadurch gekennzeichnet, dass** durch das Distanzelement (12) eine elektrische Isolation zwischen dem Kontaktelement (14) und dem Widerstandsnetzwerk (13) erzeugt ist.

5. Füllstandsgeber nach einem der vorhergehenden Ansprüche, **dadurch gekennzeichnet, dass** das Distanzelement (12) zwei sich gegenüberliegende ebene Außenflächen aufweist, wobei an den Außenflächen jeweils zumindest ein von der Außenfläche abragender Vorsprung (15) angeordnet ist.

6. Füllstandsgeber nach Anspruch 2 und/oder 5,
**dadurch gekennzeichnet, dass** das Kontaktelement (14) und/oder das Widerstandsnetzwerk (13) mit den Vorsprüngen (15) des Distanzelementes (12) korrespondierende Durchdringungen (16) aufweist.

7. Füllstandsgeber nach einem der vorhergehenden Ansprüche, **dadurch gekennzeichnet, dass** das Distanzelement (12) einteilig mit dem Widerstandsnetzwerk (13) ausgebildet ist und das Kontaktelement (14) durch Heißverstemmen mit dem Distanzelement (12) unverlierbar verbunden ist.

8. Füllstandsgeber nach einem der vorhergehenden Ansprüche, **dadurch gekennzeichnet, dass** das Distanzelement (12) aus einem thermisch verformbaren und bei Raumtemperatur formstabilen Kunststoff erzeugt ist.

## Claims

1. Filling level indicator for determining a filling level in a tank, comprising a sensor having a resistor network (13), having a contact element (14) and having a magnetic element, wherein the contact element (14) is arranged spaced apart from the resistor network (13), and the magnetic element is movable relative to the resistor network (13) and the contact element (14), wherein, depending on a position of the magnetic element relative to the resistor network (13), an electrically conductive connection between the contact element (14) and the resistor network (13) can be produced by deflecting the contact element (14), and an electric signal can be generated permitting a direct statement regarding the filling level in the tank, **characterized in that** a spacer element (12) made from plastic is arranged between the resistor network (13) and the contact element (14), the spacer element (12) being connected to the resistor network (13) and/or to the contact element (14) by means of hot calking.

2. Filling level indicator according to Claim 1, **characterized in that** the contact element (14) and/or the resistor network (13) has/have at least one penetration (16) through which a protrusion (15) of the spacer element (12) protrudes.

3. Filling level indicator according to Claim 2, **characterized in that** a subsection of the spacer element (12) covering the respective penetration (16) is arranged on the contact element (14) and/or on the resistor network (13) on the side in each case facing away from the spacer element (12).

4. Filling level indicator according to one of the preceding claims, **characterized in that** an electrical insulation is produced between the contact element (14) and the resistor network (13) by the spacer element (12).

5. Filling level indicator according to one of the preceding claims, **characterized in that** the spacer element (12) has two opposite flat outer surfaces, with at least one protrusion (15) protruding from the outer surface being arranged on each of the outer surfaces.

6. Filling level indicator according to Claim 2 and/or 5, **characterized in that** the contact element (14) and/or the resistor network (13) has penetrations (16) corresponding to the protrusions (15) of the spacer element (12).

7. Filling level indicator according to one of the preceding claims, **characterized in that** the spacer element (12) is formed integrally with the resistor network (13), and the contact element (14) is connected captively to the spacer element (12) by hot calking.

8. Filling level indicator according to one of the preceding claims, **characterized in that** the spacer element (12) is produced from a thermally deformable plastic which is dimensionally stable at room temperature.

## Revendications

1. Indicateur de niveau permettant de déterminer un niveau de remplissage dans un réservoir, comprenant un capteur et un réseau de résistances (13), doté d'un élément de contact (14) et d'un élément magnétique, dans lequel l'élément de contact (14) est disposé à distance du réseau de résistances (13) et l'élément magnétique peut être déplacé par rapport au réseau de résistances (13) et à l'élément de contact (14), dans lequel, en fonction d'une position de l'élément magnétique par rapport au réseau de résistances (13), une déviation de l'élément de contact (14) permet d'établir une liaison électriquement conductrice entre l'élément de contact (14) et le réseau de résistances (13), et un signal électrique peut être produit qui autorise une indication directe concernant le niveau de remplissage dans le réservoir,
**caractérisé en ce qu'**un élément d'écartement (12) en matière plastique est disposé entre le réseau de résistances (13) et l'élément de contact (14), dans lequel l'élément d'écartement (12) est relié au réseau de résistances (13) et/ou à l'élément de contact (14) au moyen d'un matage à chaud.

2. Indicateur de niveau selon la revendication 1, **caractérisé en ce que** l'élément de contact (14) et/ou le réseau de résistances (13) présente(nt) au moins un passage traversant (16) à travers lequel dépasse une saillie (15) de l'élément d'écartement (12).

3. Indicateur de niveau selon la revendication 2, **caractérisé en ce que** sur l'élément de contact (14) et/ou sur le réseau de résistances (13), sur le côté respectivement détourné de l'élément d'écartement (12), une section de l'élément d'écartement (12) recouvrant le passage traversant (16) respectif est disposée.

4. Indicateur de niveau selon l'une quelconque des revendications précédentes, **caractérisé en ce que** l'élément d'écartement (12) produit une isolation électrique entre l'élément de contact (14) et le réseau de résistances (13).

5. Indicateur de niveau selon l'une quelconque des revendications précédentes, **caractérisé en ce que** l'élément d'écartement (12) présente deux surfaces extérieures planes opposées, dans lequel respectivement au moins une saillie (15) dépassant de la surface extérieure est disposée sur les surfaces extérieures.

6. Indicateur de niveau selon les revendications 2 et/ou 5, **caractérisé en ce que** l'élément de contact (14) et/ou le réseau de résistances (13) présente(nt) des passages traversants (16) correspondant aux saillies (15) de l'élément d'écartement (12).

7. Indicateur de niveau selon l'une quelconque des revendications précédentes, **caractérisé en ce que** l'élément d'écartement (12) est réalisé d'un seul tenant avec le réseau de résistances (13), et l'élément de contact (14) est relié de manière imperdable à l'élément d'écartement (12) par matage à chaud.

8. Indicateur de niveau selon l'une quelconque des revendications précédentes, **caractérisé en ce que** l'élément d'écartement (12) est produit en une matière plastique thermiquement déformable et indéformable à température ambiante.
